# EUROPÄISCHE PATENTSCHRIFT

(11) **EP 1 539 340 B1**
(45) Veröffentlichungstag und Bekanntmachung des Hinweises auf die Patenterteilung: **03.01.2007**
(21) Anmeldenummer: 03748054.8
(22) Anmeldetag: 18.09.2003
(51) Int. Cl.: B01J 13/02, B01J 13/10, B01J 13/16, B41M 5/165

(54) **VERFAHREN ZUM EINKAPSELN GEL STER FARBREAKTIONSPARTNER VON F ARBREAKTIONSSYSTEMEN, DIE DANACH ERH LTLICHEN KAPSELN SOWIE DEREN VERWENDUNG IN FARBREAKTIONSPAPIEREN**
METHOD FOR ENCAPSULATING DISSOLVED COLOR REACTION PARTNERS OF COLOR REACTION SYSTEMS, THE CAPSULES OBTAINED ACCORDING THERETO, AND THEIR USE IN COLOR REACTION PAPERS
PROCEDE D'ENCAPSULAGE DE PARTENAIRES DE REACTION DE CHROMINANCE DISSOUS DE SYSTEMES DE REACTION DE CHROMINANCE, CAPSULES OBTENUES SELON LEDIT PROCEDE ET LEUR UTILISATION DANS DES PAPIERS DE REACTION DE CHROMINANCE

(30) Priorität: 20.09.2002 DE 10243921
(43) Veröffentlichungstag der Anmeldung: 15.06.2005
(73) Patentinhaber: Papierfabrik August Koehler AG, 77704 Oberkirch (DE)
(72) Erfinder: PIETSCH, Günter, 30916 Isernhagen (DE)
(74) Vertreter: Hagemann, Heinrich
(86) Internationale Anmeldenummer: PCT/EP2003/010396
(87) Internationale Veröffentlichungsnummer: WO 2004/028681

(56) Entgegenhaltungen:
- EP-A- 0 718 116
- DE-C- 3 442 268
- DE-C- 4 407 813
- US-A- 4 859 650

## Beschreibung

Die Erfindung betrifft ein Verfahren zum Einkapseln einer in einer wässerigen Emulsion vorliegenden Lösung von Farbreaktionspartnern von Farbreaktionssystemen durch übliche Mikroeinkapselungsverfahren, wobei der Farbreaktionspartner zunächst in einem Lösungsmittel gelöst und der erhaltenen Lösung unter schnellem Mischen ein Nichtlöser, der den Farbreaktionspartner allenfalls unwesentlich löst, in einer eine übersättigte Lösung einstellenden Menge beigemischt wird, die übersättigte Lösung unmittelbar unter schnellem Mischen in der wässerigen Phase emulgiert und unmittelbar danach das Einkapseln durchgeführt wird.

Ein Verfahren der oben beschriebenen Art ist aus der DE 34 42 268 C2 bekannt. Dieses Verfahren stellt darauf ab, dass übersättigte Lösungen von Farbreaktionspartnern von Farbreaktionssystemen mit insbesondere hohen Anteilen an billigem Nichtlöser ohne Beeinträchtigung der Schreibqualität des Farbreaktionssystems beim späteren Schreibvorgang eingekapselt werden können. Hierbei kann eine stark übersättigte Lösung der Farbreaktionspartner eingekapselt werden, sofern eine solche Lösung unmittelbar nach ihrer Herstellung einem Emulgier- und Einkapselungsvorgang unterworfen wird, bevor eine vorzeitige störende Auskristallisation des gelösten Farbreaktionspartners eingetreten ist. Werden derartig gewonnene Kapseln in Farbreaktionssystemen eingesetzt, dann laufen die beim Druckvorgang eintretenden Farbreaktionen überraschenderweise unbeeinträchtigt ab, nämlich so, als wenn in den Kapseln kein übersättigtes System, sondern ein reines nicht-gesättigtes System eingeschlossen wäre. Die hierbei eingesetzten Lösungsmittel bzw. Nichtlöser sind nicht biologisch abbaubar. Es wäre daher wünschenswert, biologisch abbaubare Lösungsmittel zumindest zu einem bestimmten Anteil einzusetzen, ohne dass die angesprochenen vorteilhaften Effekte beeinträchtigt werden.

Im Stand der Technik werden bereits Verfahren beschrieben, nach denen beispielsweise Pflanzenöl-Alkylester eingesetzt werden, wobei die Frage der Übersättigung keine Rolle spielt. So befasst sich die EP 0 593 192 B1 mit einem druckempfindlichen Aufzeichnungsmaterial, wobei das chromogene Material in einem Ester gelöst ist. Bei diesem Ester handelt es sich um einen mono-, di- oder trifunktionellen Ester einer nicht-aromatischen Monocarbonsäure, die eine gesättigte oder ungesättigte geradkettige oder verzweigte Kohlenwasserstoffkette mit mindestens 5 Kohlenstoffatomen in der Kette enthält, zusätzlich zu dem Carboxylkohlenstoffatom. Hierbei erfolgt die Einschränkung, dass (a) der Ester nicht in einem Gemisch mit Pflanzenöl vorliegt, (b) im Falle eines Diesters dieser nicht in einem Gemisch mit Kohlenwasserstofföl vorliegt und (c), wenn der Ester ein Methylpalmitat umfasst, die chromogene Zusammensetzung im wesentlichen ganz aus Ester(n), wie angegeben, und chromogenem Material zusammengesetzt ist.

Die EP 0 520 639 B1 beschreibt ein druckempfindliches Kopierpapier, wobei das eingesetzte Lösungsmittel für die Farbbildner ein Pflanzenöl umfasst. Zusätzlich enthält es einen mono- oder difunktionellen Ester einer nicht-aromatischen Monocarbonsäure, die gesättigte oder ungesättigte, geradkettige oder verzweigte Kohlenwasserstoffatome mit mindestens 3 Kohlenstoffatomen in der Kette aufweist.

Die DE 695 04 612 T2 betrifft unter anderem Mikrokapseln für druckempfindliche Aufzeichnungspapiere. Danach wird das hydrophobe chromogene Mittel in einem organischen Lösungsmittel gelöst. Dieses Lösungsmittel kann eine Mischung enthalten, die durch Um-esterung eines Pflanzenöls erhalten worden ist. Es wird herausgestellt, dass die chemische Transformation der Pflanzenöle, obwohl sie nicht die Verunreinigungen aus den Ausgangsölen eliminiert und nicht die Zusammensetzung an Fettsäuren der gleichen Öle modifiziert, die Leistungen synthetischer Ester ermöglicht. Hiermit sollen die Herstellungskosten dieses Produktes weit unter denjenigen synthetischer Ester gesenkt werden. Diese bekannte Lehre bezieht auch ein, dass neben den noch verunreinigten Umesterungsprodukten eines Pflanzenöls Mineralöle eingesetzt werden, dies aber in einer Menge, die noch eine vollständige Lösung des Farbbildners gewährleistet.

Die Erfindung hat sich die Aufgabe gestellt, den oben geschilderten Stand der Technik so weiterzubilden, dass er weiterhin wirtschaftlich geführt werden kann und Mikrokapseln erhalten werden können, die bei ihrer Anwendung in druckempfindlichen Aufzeichnungssystemen die erforderlichen Anforderungen erfüllen und ökologische Vorteile durch die Einbindung abbaubarer Pflanzenöle oder Derivate hiervon bieten.

Erfindungsgemäß wird diese Aufgabe dadurch gelöst, dass als Lösungsmittel ein Pflanzenöl-C₁-C₈-Alkylester verwendet wird.

Bei diesem C₁-C₈-Alkylester handelt es sich um einen Ester mit einer sogenannten Niedrig-Alkylgruppe mit 1 bis 8 Kohlenstoffatomen. Insbesondere handelt es sich um einen niedrigen linearen oder verzweigten Alkyl-Rest mit einer Kohlenstoffzahl von 1 bis 8. Vorzugsweise ist der Alkyl-Rest eine C₁-C₆-, insbesondere eine C₁-C₄-Gruppe. Die Alkyl-Reste gehen insbesondere auf eine Veresterung bzw. Umesterung des jeweiligen Pflanzenöls mit Methanol, Ethanol, n-Propanol, Isopropanol, n-Butanol, Isobutanol, t-Butanol, Pentanol- und Hexanolisomere und/oder 2-Ethylhexanol zurück. Pflanzenöl-Methylester werden im Rahmen der Erfindung besonders bevorzugt, insbesondere der Rapsöl-Methylester, dieser insbesondere in gereinigter Form.

Bezüglich des zu einem C₁-C₈-Alkylester umgeesterten Pflanzenöls unterliegt die Erfindung keiner wesentlichen Einschränkung. Dabei kann es sich beispielsweise handeln um Zwergpalmöl, Rapsöl, Sojaöl, Leinöl, Maisöl, Palmöl, Sonnenblumenöl, Olivenöl, Erdnussöl, Baumwollsaatöl, Kokosnussöl, Palmkernöl, Rüböl, Rizinusöl und Holzöl.

Bevorzugt wird im Rahmen der Erfindung ein Rapsöl-C₁-C₈-Alkylester herangezogen. Beim Rapsöl stehen nach der derzeitigen Marktsituation zwei spezielle Rapsöl-Sorten zur Verfügung. Dabei ist das unterscheidende Merkmal der Gehalt an Erukasäure. So gibt es Rapsöle mit einem hohen Gehalt an Erukasäure ("high eruca acid rapeseed, HEAR") mit einem speziellen Fettsäuremuster, wobei ein wesentlicher Bestandteil die Erukasäure ist, während weitere Hauptbestandteile vorliegen in Form von Fettsäuren von C18:1, C18:2 und C18:3, während das Fettsäuremuster von Rapsöl mit niedrigem Erukasäuregehalt eine diesbezüglich deutliche Verschiebung im Fettsäuremuster zeigt, wonach der Gehalt an Erukasäure nur wenige Prozent und die vorstehend bezeichneten Fettsäuren C18:1 neben C18:2 und C18:3 den Hauptbestandteil ausmachen. Diesbezüglich sei verwiesen auf Michael Bockisch "Nahrungsfette und -öle", Handbuch der Lebensmittel-Technologie, Verlag Eugen Ulmer, 1993, S. 210/211. Die Züchtung der beiden angesprochenen Raps-Sorten führte in jüngster Zeit zu den sogenannten Doppel Null- oder "Null-Null-Sorten", die sowohl Erukasäure als auch toxische Glucosinolate nur noch in Spuren enthalten, während sie reich an Ölsäure sind. Grundsätzlich lassen sich also beide Rapsöle als Ausgangsmaterial für die erfindungsgemäß einzusetzenden Alkylester heranziehen, wobei in Einzelfällen das Rapsöl mit hohem Gehalt an Erukasäure Vorteile bietet, so eine verbesserte Schreibleistung. In Einzelfällen hat es sich gezeigt, dass die angestrebten Effekte insbesondere dann erreicht werden, wenn ein Rapsöl mit hohem Erukasäuregehalt zu dem Pflanzenöl-C₁-C₈-Alkylester umgeestert und entsprechend erfindungsgemäß verwendet wird. Dabei werden die angestrebten Effekte insbesondere dann erzielt, wenn das erhaltene Verfahrenserzeugnis von Verunreinigungen befreit worden ist, was ebenfalls für alle weiteren erfindungsgemäß in Frage kommenden Pflanzenöl-C₁-C₈-Alkylester gilt. Wenn von einem Pflanzenöl-C₁-C₈-Alkylester gesprochen wird, dann soll hiermit ausdrücklich eine chemische Spezies bezeichnet werden, unabhängig davon, wie sie tatsächlich hergestellt bzw. gewonnen wird. Grundsätzlich besteht die Möglichkeit, ein an sich durch die Umesterung eines Pflanzenöls erhaltenes erfindungsgemäßes Pflanzenöl-C₁-C₈-Alkylester auch durch Zusammenstellung geeigneter Fettsäuren und deren Veresterung mit den geeigneten Alkoholen zu gewinnen.

Im Rahmen der Erfindung wird der angesprochene Farbreaktionspartner von Farbreaktionssystemen in eine Lösung überführt, die einen der bezeichneten Pflanzenöl-C₁-C₈-Alkylester enthält. Hierbei kann dieser alleiniges Lösungsmittel sein. Allerdings hat es sich in verschiedenen Fällen als besonderer Vorteil erwiesen, dass die Lösung zusätzlich ein weiteres Lösungsmittel enthält, das den angesprochenen Farbreaktionspartner besser löst als der Pflanzenöl-C₁-C₈-Alkylester und als "Lösungsmittel guten Lösungsvermögens" bezeichnet wird. Wenn hier von einem "Lösungsmittel guten Lösungsvermögens" gesprochen wird, dann bezieht sich dieses Lösungsvermögen auf den jeweils einzukapselnden Farbreaktionspartner. Wird der Farbreaktionspartner von einem solchen Lösungsmittel in einer Menge gelöst, die zu einer zufriedenstellend konzentrierten und einzukapselnden Lösung führt, dann wird, hier in Abwesenheit des erfindungsgemäß zwingend einzusetzenden Pflanzenöl-C₁-C₈-Alkylesters, von einem "guten Lösungsvermögen" gesprochen. Es dient nur der Feststellung des "guten Lösungsvermögens", da im Rahmen der Erfindung dieses Lösungsmittel mit gutem Lösungsvermögen nicht allein, sondern nur in Verbindung mit dem beschriebenen Pflanzenöl-C₁-C₈-Alkylester herangezogen wird.

Wird demzufolge neben dem erfindungsgemäß zwingend einzusetzenden Pfanzenöl-C₁-C₈-Alkylester ein "Lösungsmittel guten Lösungsvermögens" eingesetzt, dann sollte hier als Richtlinie gelten, daß dessen Lösungsvermögen mindestens etwa 10 % über dem des jeweiligen Pflanzenöl-C₁-C₈-Alkylesters, bei gleichbleibendem Farbbildner liegt, insbesondere mehr als 20 %, und ganz besonders mehr als 30 % (bei sonst gleichbleibenden Bedingungen) beträgt.

Selbstverständlich muss jedes Lösungsmittel auch in dem herzustellenden Übersättigungssystem inerten Charakter haben, d.h., es darf sich weder selbst chemisch verändern noch die jeweils gelöste chemische Verbindung verändern, was auch für die erfindungsgemäß einzusetzenden Pflanzenöl-C₁-C₈-Alkylester gilt. So müssen gegebenenfalls in Erscheinung tretende Veränderungen vernachlässigbar sein.

Der für die Zwecke der Erfindung eingesetzte "Nichtlöser" ist zwar im oben angesprochenen Sinne ebenfalls inert, würde jedoch allein keine ausreichende konzentrierte Lösung des jeweils zu lösenden Farbreaktionspartners bilden. Vielmehr würde er diesen allenfalls unwesentlich, z.B. etwa 0,01 bis 3%, insbesondere 0,1 bis 0,3% oder weniger, lösen, was bezüglich der Konzentration der einzukapselnden Lösung an Farbreaktionspartnern praktisch unbedeutend ist. Das würde beispielsweise im Falle der Mehrzahl der bekannten Farbbildner sowie deren sauren Farbreaktionspartnern, die regelmäßig besonders gut in aromatischen Systemen löslich sind, bedeuten, dass unpolare aliphatische Verbindungen unter den Begriff "Nichtlöser" fallen, die diese Farbreaktionspartner unter praktischen Gesichtspunkten nicht lösen. Im Ergebnis sind daher die Begriffe "Nichtlöser" sowie "Lösungsmittel" in Form von Pflanzenöl-C₁-C₈-Alkylestern und "Lösungsmittel mit gutem Lösungsvermögen" stets im Hinblick auf ihr Lösungsvermögen gegenüber den zu lösenden Verbindungen in Form der genannten Farbreaktionspartner zu sehen. In jedem Fall unterscheidet sich ihr diesbezügliches Lösungsvermögen so deutlich, dass unter diesem Gesichtspunkt die hier verwendeten Definitionen gerechtfertigt sind.

Bei den bezeichneten guten Lösungsmitteln handelt es sich insbesondere um aromatische Lösungsmittel und/oder chlorierte Paraffine. Hierzu zählen insbesondere alkylierte Biphenyle, teilydrierte Terphenyle, arylierte Xylole, wie z. B. Xylylxylol, alkylierte Naphthaline, wobei der Alkyl-Rest vorzugsweise 3 bis 10 Kohlenstoffatome enthält, und es sich insbesondere um den Isopropyl-, Di-isopropyl-, Butyl-, Amyl-, Hexyl- und/oder 2-Ethylhexyl-Rest handelt. Die Alkylphthalate, insbesondere die Octylphthalate, aber auch einfache aromatische Verbindungen, wie Benzol, Alkylbenzole (z.B. Methylbenzol, Ethylbenzol, Propylbenzol, Isopropylbenzol, Amylbenzol und Hexylbenzol) sowie Halogenbenzole, wie Chlorbenzol, sind geeignet. Als nicht-aromatische Verbindungen, die ebenfalls im Sinne der Erfindung Lösungsmittel guten Lösungsvermögens darstellen, sind insbesondere chlorierte Paraffine anzugeben. Von besonderer Bedeutung sind hierunter chlorierte geradkettige Paraffine mit 6 bis 18 Kohlenstoffatomen und einem Chlorierungsgrad von 20 bis 60 Gew.-%.

Im Rahmen der Erfindung lässt sich eine Vielzahl von Nichtlösern für die jeweiligen Farbreaktionspartner von Farbreaktionssystemen heranziehen. Hierbei handelt es sich insbesondere um nicht-aromatische Lösungsmittel, deren Vorprodukte entweder in der Natur in großen Mengen vorkommen und damit billig sind bzw. einfach und daher wirtschaftlich hergestellt werden. Hierzu zählen insbesondere aliphatische und cycloaliphatische Verbindungen. Die aliphatischen und cycloaliphatischen Erdöl-Bestandteile spielen dabei eine besondere Rolle, insbesondere Rohbenzin (Gasolin) bzw. seine Teilfraktionen in Form von Petrolether, Leichtbenzin, Ligroin (Lackbenzin), Schwerbenzin, Leuchtöl (Kerosin), d.h., die zweite Hauptfraktion des einer fraktionierten Destillation unterworfenen Erdöls, das Paraffinkohlenwasserstoff mit 9 bis etwa 20 Kohlenstoffatomen enthält, sowie auch Gasöl (Dieselöl, Heizöl) als dritte Hauptfraktion der Destillation, das sich aus Paraffinen mit 12 bis 18 Kohlenstoffatomen zusammensetzt und in Dieselmotoren oder für Heizzwecke Verwendung findet. Auch Erdgasbenzin ist geeignet, das im Erdgas vorhandene Benzingasanteile darstellt und durch Komprimieren oder durch Absorption in Öl aus dem Gas entfernt wird.

Die oben genannten aliphatischen Erdölfraktionen gehen auf ein Erdöl zurück, das hauptsächlich geradkettige Paraffine enthält. Daneben gibt es auch ein Erdöl (wie das sowjetische Naphtha), das bis zu 80% aus cyclischen Kohlenwasserstoffen (Naphthene) besteht. Die flüssigen Naphthenfraktionen lassen sich ebenfalls mit Vorteil heranziehen. Hierzu zählen als wichtigste Vertreter Cyclopentan und Cyclohexan sowie deren Alkyl-Derivate. Ferner kommen Erdölfraktionen von solchen Erdölen in Frage, die bezüglich ihrer Zusammensetzung eine Mittelstellung zwischen den "paraffinischen" und den "naphthenischen" Erdölen einnehmen.

Bei der Wahl der Mengenverhältnisse von Nichtlöser zu den Lösungsmitteln unterliegt die Erfindung keinen wesentlichen Einschränkungen. Es lässt sich für den Fachmann problemlos dasjenige Gewichtsverhältnis einstellen, mit dem es gewährleistet ist, dass sich der erfindungsgemäße Verfahrensablauf vollzieht und schließlich ein wertvolles Kapselmaterial erhalten wird, das die Lösung der zugrundegelegten Aufgabe, siehe oben, ermöglicht. Hierbei ist es bevorzugt, dass das Lösungsmittel oder Lösungsmittelgemisch und der Nichtlöser, insbesondere in Form des nicht-aromatischen Lösungsmittels, in einem Gewichtsverhältnis eingestellt werden, bei dem auf 1 Gew.-Teil Lösungsmittel oder Lösungsmittelgemisch etwa 0,5 bis 4 Gew.-Teile, insbesondere etwa 1 bis 2,5 Gew.-Teile Nichtlöser entfallen. Für den Fall, dass ein "gutes" Lösungsmittel für den jeweiligen Farbreaktionspartner eines Farbreaktionssystems neben dem erfindungsgemäß heranzuziehenden Pflanzenöl-C₁-C₈-Alkylester verwendet wird, ist es bevorzugt, wenn auf 1 Gew.-Teil gutes Lösungsmittel etwa 0,1 bis 9 Gew.-Teile, insbesondere etwa 0,25 bis 2 Gew.-Teile Pflanzenöl-C₁-C₈-Alkylester entfallen. In jedem Fall wird, wie bereits mehrfach zum Ausdruck gebracht, letztlich das angesprochene Übersättigungssystem eingestellt und erfindungsgemäß weiterbehandelt. Unter Bezugnahme auf Raumtemperatur sollte dabei eine Übersättigung von mindestens 5%, vorzugsweise von mindestens etwa 30% und insbesondere mehr als etwa 50 Gew.-% eingestellt werden. Es ist im Rahmen der Erfindung bei rein handwerklich gesteuerter Verfahrensführung durchaus möglich, einen Übersättigungsgrad von mehr als etwa 60 Gew.-% und in Einzelfällen auch von mehr als 85 Gew.-% zu erreichen.

Das erfindungsgemäße Verfahren ist für die Einkapselung von Farbbildnern von Farbreaktionssystemen, insbesondere in Farbreaktionspapieren, bei denen sich Farbbildner und saurer Farbreaktionspartner räumlich voneinander getrennt auf der Oberfläche zweier verschiedener sich berührender Papiere oder auf der Oberfläche eines einzigen Papiers (autogene Papiere) von besonderem Vorteil. Als Farbreaktionspartner in Farbreaktionssystemen kommen dabei insbesondere basische Farbbildner in Frage. Hierbei handelt es sich insbesondere um folgende Verbindungen: Diarylphthalid, wie 3,3-Bis-(p-dimethylaminophenyl)-6-dimethylaminophthalid (Kristallviolettlakton) und 3,3-Bis-(p-dimethylaminophenyl)phthalid (Malachitgrünlakton), Leukauramine, wie z.B. N-(2,5-Dichlorphenyl)leukauramin, N-Benzoylauramin, N-Acetylauramin oder N-Phenylauramin, Rhodamin-B-Laktam, wie N-(p-Nitrophenyl)rhodamin-B-laktam, Polyarylcarbinole, wie Bis-(p-dimethylaminophenyl) methanol, Kristallviolettcarbinol. Eine besondere wirtschaftliche Bedeutung hat die Farbbildnergruppe der Fluorane, insbesondere die der 2.7-Di-N-substituierten Fluorane, deren Amino- oder N-Heterocykelgruppen substituiert sind, erlangt (der Vollständigkeit halber sei erwähnt, daß in der Fachliteratur die 3.7-Positionen des Fluorangerüstes gelegentlich auch als 2.6-Positionen, je nach dem angewandten Nomenklaturzählsystem, bezeichnet werden). Solche Fluoran-Farbbildner sind in der Literatur umfänglich beschrieben, z. B. in der EP-A-276 980, GB-B-12 69 601, GB-B-13 74 049, GB-B-20 02 801, GB-B-11 82 743. Weiterhin bedeutsame Farbbildner rekrutieren sich aus der Gruppe der 3.1-Benzoxazine, wie zum Beispiel 2-Phenyl-4-(4-diethylaminophenyl)-4-(4-methoxyphenyl)-6-methyl-7-dimethylamino-4H-benz.3,1-oxazin oder isomere Verbindungen davon. Auch Benzo- und Naphthospiropyrane sind von gewisser Bedeutung. Hierbei handelt es sich um sogenannte Primärfarbbildner, die bei der gewünschten Farbreaktion praktisch momentan durch die Reaktion mit dem sauren Farbreaktionspartner eine Farbe bilden können. Zusätzlich können auch Sekundärfarbbildner, deren Farbreaktion vergleichsweise langsam verläuft und einem schnellen Verbleichen der durch den Primärfarbbildner gebildeten Färbung entgegenwirken, herangezogen werden. Hierfür ist insbesondere N-Benzoylleukomethylenblau und/ oder ein N-Alkylcarbazolyldiphenylmethan-Derivat geeignet.

In der Farbreaktionstechnik, insbesondere der Farbreaktions-Papiertechnik, ist es in Einzelfällen vorteilhaft, auch den Farbreaktionspartner der Farbbildner gelöst einzukapseln. Für die üblichen sauren Farbreaktionspartner wird insbesondere ein aromatisches Lösungsmittel eingesetzt. Zu den Farbreaktionspartnern zählen saure Phenolharze, insbesondere Phenylaldehydharze, wie Phenol-Formaldehyd-Harze. Im Rahmen der Erfindung können auch sogenannte "chelatisierte" oder "zinkmodifizierte" Phenolharze eingekapselt werden, bei denen die phenolischen Protonen durch Zink ersetzt sind. Diese Phenolharze werden beispielsweise in der US-A-37 32 120 beschrieben. Insbesondere kommen dabei Verbindungen mit einer sauren Carboxylgruppierung (auch in Form einer Anhydrid-Struktur) in Frage, wie: Phenolacetylen-Polymere, Maleinsäureharze, teilweise oder vollständig hydrolysierte Styrolmaleinsäureanhydrid-Mischpolymerisate und Ethylenmaleinsäureanhydrid-Mischpolymerisate, Carboxypolymethylen und ganz oder teilweise hydrolysiertes Phenylmethylenethermaleinsäureanhydr id-Mischpolymerisat, p-Halogenphenol-Formaldehydharze sowie Harze vom Typ des Bisphenols A. Darüber hinaus eignen sich insbesondere auch saure Monomere phenolischer Verbindungen, wie z.B. Bis-(p-Hydroxyphenyl)propan, Naphthol-Derivate, p-Hydroxybenzoesäureester und Salicylsäure-Derivate.

Die oben beschriebenen sauren Farbreaktionspartner von Farbbildnern eignen sich im Rahmen der Erfindung besonders bevorzugt für folgende Farbbildner: Kristallviolettlacton, orange, rot und grünolive bzw. schwarz reagierende Fluorane und Benzonaphthospiranverbindungen.

Auch bei der Wahl des Einkapselungsverfahrens unterliegt die vorliegende Erfindung keiner wesentlichen Einschränkung. Hierbei können die bekannten Einkapselungsverfahren herangezogen werden, die im allgemeinen ein ausreichend schnelles Einkapseln des frisch gebildeten gesättigten Lösungssystems des Farbbildners bzw. seines sauren Farbreaktionspartners in Emulsionsform gewährleisten. Dabei ist im allgemeinen die Ausbildung einer wenn auch noch flüssigen Kapselumhüllung innerhalb von wenigen Sekunden bis wenigen Minuten abgeschlossen. Das Einkapseln kann in einem zeitlichen Rahmen von nur etwa 2 Minuten abgeschlossen sein. Nachfolgende Maßnahmen, wie z.B. die Härtung der Kapsel, sind für die Erfindung gleichfalls nicht von kritischer Bedeutung und können erheblich längere Reaktionszeiten in Anspruch nehmen. Besonders bevorzugt ist im Rahmen der Erfindung das Koazervierungsverfahren auf Gelatinebasis sowie das Melamin-Formaldehyd-Kondensationsverfahren. Gleichermaßen sind auch solche üblichen Verfahren geeignet, die nicht auf dem Koazervierungs- bzw. Kondensationsprinzip beruhen.

Geeignete Einkapselungsverfahren werden nachfolgend noch detaillierter erläutert: Beim Koazervierungsverfahren stellt man z.B. eine etwa 50°C warme wässerige Lösung aus ionisierbarem hydrophilen Kolloidmaterial (insbesondere Gelatine, Gummiarabicum, CMC, Alginat oder Kasein) her, wobei mindestens zwei elektrisch gegenpolig aufgeladene Kolloide ausgewählt werden. Bei der Verwendung von Gelatine einerseits und z.B. Gummiarabicum andererseits liegen oberhalb des isoelektrischen Punktes der Gelatine (z.B. pH 8) gleichnamig elektronegativ geladene Kolloidionen vor. Die einzukapselnde Lösung des Farbbildners wird in dieser wässerigen Kolloidlösung emulgiert, wobei sich eine Emulsion vom Typ Öl-in-Wasser bildet. Anschließend wird der pH-Wert auf etwa 3,8 unter gleichzeitigem Verdünnen der Emulsion mit Wasser gesenkt, indem zu der Emulsion 50°C warme, stark verdünnte wässerige Essig- oder Salzsäure gegeben wird. Dabei erfolgt eine elektropositive Umladung der Gelatinemoleküle, verbunden mit einem Abscheiden des die Kapselwand bildenden flüssigen Komplexkoazervats. Beim Abkühlen der Mischung von 50°C auf 6 bis 8°C tritt Gelatinisierung bzw. Verfestigung der Kapselwandung ein. Eine zusätzliche chemische Härtung der Kapselwände durch Vernetzen der Gelatine mittels Formaldehyd oder Glutarddialdehyd führt zu stabilen Kapseldispersionen. Dieses Verfahren wird unter anderem beschrieben in der US-A-28 00 457. Es kann entsprechend Anwendung zum Einkapseln des sauren Farbreaktionspartners des Farbbildners finden.

Es gibt aber auch, wie bereits angesprochen, Verfahren, bei denen die Mikrokapseln mit einer umschlossenen Lösung eines FarbFarbreaktionspartners eines Farbreaktionssystems ohne Koazervation, allein durch Zumischen eines mit Wasser nichtmischbarem öligen Materials, einer Lösung mindestens eines thermoplastischen Harzes und Wasser hergestellt werden. Das Wasser bewirkt dabei das Ausscheiden des Harzes aus der Lösung in Form fester Teilchen um einen Kern des genannten ölige Materials. Dieses Verfahren wird in der US-A-34 18 250 beschrieben. Weitere relevante Einkapselungsverfahren, die im Rahmen der Erfindung herangezogen werden können, gehen aus der DE-A-29 40 786 sowie 26 52 875 hervor.

Bei dem aus der DE-A-29 40 786 bekannten Verfahren wird die Kondensation von Melamin-Formaldehyd-Vorkondensaten und/oder deren C₁-C₄-Alkylethern in Wasser genutzt, indem das im wesentlichen in Wasser unlösliche, den Kern der Mikrokapseln später bildende Material dispergiert ist. Die Kondensation erfolgt in Gegenwart von gelösten Polymeren, die negativ geladene ionische Gruppen enthalten, bei pH-Werten von 3 bis 6,5 und bei Temperaturen von 20 bis 100°C. Das besondere Kennzeichen dieses Verfahrens besteht darin, dass das in Wasser gelöste Polymer ein Sulfonsäuregruppen tragendes Homo- oder Copolymerisat ist, das keine Phenyl- und/oder Sulfophenylgruppen aufweist und das einen K-Wert nach Fikentscher von 100 bis 170 sowie eine Viskosität von 200 bis 500 mPas bei einem Schergefälle von 489 s⁻¹ (gemessen in 20 gew.-%iger Lösung bei 20°C) hat, und das Melamin-Formaldehyd-Vorkondensat nach Maßgabe der Kondensation kontinuierlich oder in Portionen zugegeben wird. Dieses Verfahren ist leicht steuerbar. So kann durch einfache Reihenversuche die optimale benötigte Menge an wasserlöslichen Polymeren leicht ermittelt werden. Ein ähnliches Einkapselungsverfahren, das ebenfalls auf der Kondensationsreaktion von Melamin-Formaldehyd-Vorkondensatharzen und/oder deren C₁-C₄-Alkylethern basiert, wird in der DE-C1-37 43 427 beschrieben.

Mit Vorteil lässt sich im Rahmen der Erfindung auch das in der EP-B-0 16 366 beschriebene Verfahren heranziehen, dessen spezieller Anwendungsfall die Herstellung von die Lösung eines Farbbildners enthaltenden Mikrokapseln betrifft. Hierbei wird die Lösung eines Farbbildners in einem organischen Lösungsmittel von Kapseln aus einem Polyadditionsprodukt eines speziellen Diisocyanats und eines Diamins umhüllt. Zuerst wird unter Erwärmen und unter Rühren ein geeignetes Diisocyanat zu einer Lösung eines Farbbildners in einem aromatischen Lösungsmittel gegeben. Diese organische Phase wird dann in eine wässerige Polyvinylalkohollösung überführt und an einer Ultraschallpfeife emulgiert. Unter Rühren wird dieser Emulsion eine verdünnte wässerige Aminlösung zugeführt. Die Menge des Amins und des Isocyanats stehen im stöchiometrischen Verhältnis. Nach der Zugabe des Amins wird noch eine gewisse Zeit bei Raumtemperatur und darauf bei erhöhter Temperatur nachgerührt.

Das erfindungsgemäße Verfahren kann durch rein handwerkliche Erwägungen im Hinblick auf bestimmte Zielsetzungen Modifikationen unterzogen werden, ohne dass die angestrebten Vorteile beeinträchtigt würden. Auch können andere, vorstehend nicht beschriebene Verfahren für die Zwecke der Erfindung geeignet sein, sofern sie gewährleisten, dass die mehr oder weniger stark übersättigte frische Lösung der Farbreaktionspartner von Farbreaktionssystemen, insbesondere in Farbreaktionspapieren, in einer so kurzen Zeit eingekapselt bzw. umhüllt wird, dass eine störende vorzeitige Auskristallisation der gelösten Farbreaktionspartner vor dem Einkapseln weitestgehend ausgeschlossen ist. Als Richtlinie für die Zeitdauer zwischen Herstellung der übersättigten Lösung und Ausbildung der einzelnen Tröpfchen des zu umkapselnden Mediums mit Beginn der Umhüllung kann eine Zeit von etwa 1 bis 60 Sekunden angegeben werden. Bei optimaler Verfahrensführung kann diese Zeit sogar noch unterschritten werden, was von Vorteil ist. Begünstigt wird eine kurzzeitige Verfahrensführung dadurch, dass das Vermischen der Ausgangsmaterialien, einerseits die möglichst hochkonzentrierte Lösung des jeweiligen Farbreaktionspartners und andererseits dessen Nichtlöser, in einem Schnellmischer, z.B. einem stationären Rohrmischer, der unmittelbar vor dem eigentlichen Emulgierapparat stationiert ist, durchgeführt wird. Der zeitbestimmende Schritt des gesamten Verfahrens läge dann lediglich noch in der Einkapselungsmethode. Die üblichen Einkapselungsverfahren gewährleisten regelmäßig eine schnelle Verfahrensführung.

Technologisch lässt sich die vorliegende Erfindung wie folgt erklären: Durch das rasche Emulgieren mit nachfolgendem Einkapseln der frischen übersättigten Lösung des Farbreaktionspartners, insbesondere des Farbbildners für Farbreaktionspapiere, mit einem hohen Nichtlöser-Anteil kommt der an sich zu erwartende umfängliche Kristallisationsvorgang innerhalb der Kapsel nicht erkennbar zustande. Dies könnte beispielsweise darauf zurückgehen, dass die Kristallkeimbildungskräfte innerhalb der Kapseln bzw. auf den Kapselinnenwänden nicht ausreichen. Andererseits ist es wahrscheinlich, dass dennoch, zumindest in einem gewissen Umfang, Kristallisationsvorgänge in Mikroform ablaufen, diese aber zu besonders feinkristallinen ablaufen, diese aber zu besonders feinkristallinen bzw. kolloiddispersen Ausfällungen führen, die praktisch einer Molekulardispersion entsprechen, wobei sich dieser Dispersionszustand beim späteren praktischen Gebrauch, so z.B. von Kapseln mit einem Gehalt einer Lösung eines Farbbildners in Farbreaktionspapieren beim Schreibvorgang, nicht nachteilig auswirkt. Der oben dargelegte mögliche Wirkungsmechanismus soll nicht bindend sein. Es könnten auch andere Wirkungsmechanismen eine Erklärung geben.

Der besondere Vorteil der Erfindung besteht darin, dass der Anteil des Nichtlösers außergewöhnlich hoch werden kann, sogar in Einzelfällen bis zu etwa 85 Gew.-% und mehr des gesamten Lösungssystems. Das bedeutet, dass der Preis des Gesamtlösungsmittelsystems im wesentlichen durch den billigen Nichtlöser bestimmt wird. Erfolgt das Einkapseln aus einem solchen Lösungssystems, dann werden Kapseln erhalten, die bezüglich ihrer Eignung in Farbreaktionssystemen den bekannten Kapseln, die aus nicht übersättigten Systemen hergestellt werden, mindestens gleichwertig sind. Durch die erfindungsgemäß zwingende Einbindung von Pflanzenöl-C₁-C₈-Alkylestern treten weitere überraschende Vorteile in Erscheinung. Insbesondere treten sie verstärkt in Erscheinung bei der Verwendung von Rapsöl-C₁-C₈-Alkylestern, vorzugsweise Rapsölmethylester. So hat es sich gezeigt, dass die Schreibleistung gegenüber den bisher eingesetzten Systemen deutlich verbessert wird. Dies kann unter anderem darauf zurückzuführen sein, dass die erhaltenen Kapseln nach der Verteilungskurve von Gauss überraschenderweise eine enge Teilchengrößenverteilung zeigen, insbesondere eine enge und mono-modale Verteilungskurve. Da demzufolge die Farbintensität eines entsprechenden Ausdruckes mit derartigen Reaktionsdurchschreibesystemen gesteigert ist, ergibt sich hieraus, wenn gleiche Farbintensität angestrebt wird, die Möglichkeit des Senkens der Mikrokapselmasse/m², was einen wirtschaftlichen Vorteil bedeutet. So hat es sich gezeigt, daß unabhängig vom Streichverfahren (Walzenauftrag, Rakelauftrag oder Curtain Coater) bei vergleichbarer Schreibleistung Farbbildnereinsparungen von etwa 20 bis 30% und in Einzelfällen sogar mehr möglich sind.

Darüber hinaus führt die mono-modale Verteilung zu weiteren Vorteilen. So ist die unerwünschte hohe Reibempfindlichkeit, die man bei bekannten Systemen feststellt, durch den Ausschluss überdimensionierter Mikrokapseln stark reduziert. Nicht wirksame Mikrokapseln mit zu kleinem Durchmesser, im Bereich von etwa 1 µm, werden weitgehend ausgeschlossen, was ebenfalls einen Kostenvorteil bedeutet. Zu kleine Mikrokapseln sind im allgemeinen nutzlos, während die größeren eine zu hohe Angriffsfläche bei Reibung und Handling zeigen. Somit ist es stets wünschenswert, Kapseln zur Verfügung zu haben, die bei enger Teilchengrößenverteilung (z.B. durchschnittlicher Teilchendurchmesser von etwa 4 ± 1 Mikrometer, insbesondere etwa 4 ± 0,5 Mikrometer) weitestgehend mono-modal sind. Darüber hinaus wird die biologische Abbaubarkeit durch die Einverleibung von Pflanzenölalkylestern positiv beeinflusst. Ein besonderer Vorteil der vorliegenden Erfindung liegt in einer ganz erheblichen Energieeinsparung bei der Emulgierung der einzukapselnden Lösung. So kann in der Regel die Drehzahl des Emulgiergerätes bei gleichbleibender Kapselgröße von 3700 U/min auf etwa 3100 U/min im allgemeinen reduziert werden. Dies entspricht einer Energieeinsparung von etwa 30 %. Darüber hinaus zeigt es sich, daß eine erhebliche Reduzierung des "Farbbildnerablegens" erfolgt. Dieses ist wie folgt zu verstehen: Mittelblätter mit Farbentwickler auf der CF-Seite (coated front) neigen nach dem Bedrucken mit Druckfarben im Trocken- oder Naß-Offset-Verfahren zum Farbbildnerablegen. Dabei geht innerhalb von wenigen Tagen, beispielsweise nach 1 bis 2 Tagen, durch ungewollte Kapselzerstörung der freigesetzte Farbbildner in der bedruckten Rolle von der Mittelblatt-CB- auf die Mittelblatt-CF-Seite der nächsten Lage über. Hierdurch tritt eine ganz erhebliche Reduzierung bei der Verwirklichung der vorliegenden Erfindung auf. Durch die bereits angesprochene Möglichkeit der Reduzierung der Farbbildnermenge tritt dieses Phänomen des Farbbildnerablegens noch stärker zurück.

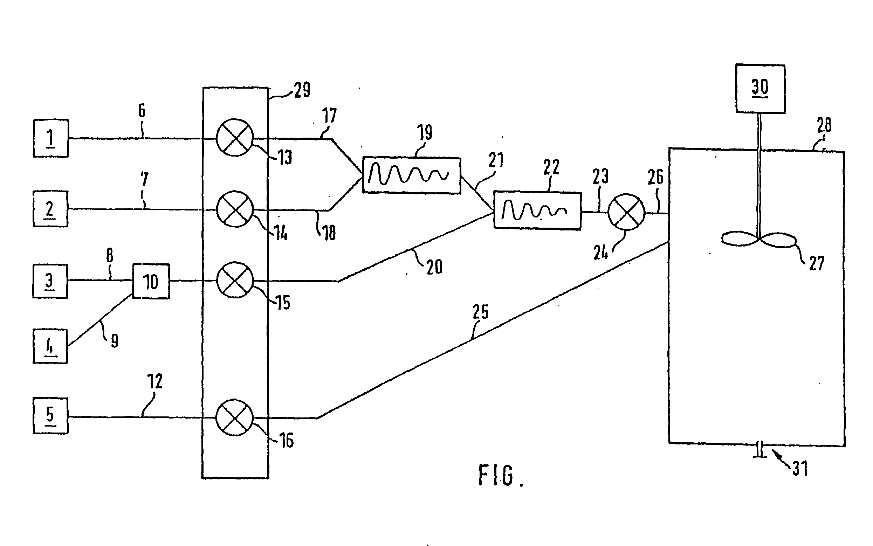

Die Erfindung soll nachfolgend anhand verschiedener Beispiele sowie einer Figur erläutert werden. Die Figur zeigt in schematischer Form die Durchführung des erfindungsgemäßen Verfahrens. Hierbei wird auf das Einkapseln eines Farbbildners für Farbreaktionspapiere Bezug genommen. Entsprechendes gilt auch für die Einkapselung eines sauren Farbreaktionspartners des Farbbildners.

Nach der Figur befindet sich eine Lösung von Kristallviolettlacton in einer Mischung aus 30 Gewichtsteilen Xylylxylol und 15 Gewichtsteilen Rapsölmethylester im Behälter 1, während entaromatisiertes Kerosin (aliphatisches bzw. nicht-aromatisches Lösungsmittel) im Behälter 2 vorliegt. Im Behälter 3 befindet sich eine wässerige kolloidale Gelatinelösung, die später das Material der Kapsel bildet. Im Behälter 4 befindet sich als wässerige Gummiarabicum-Lösung die zweite kolloidale Komponente. Die Farbbildnerlösung des Behälters 1 tritt über Leitung 6 in den Pumpenkopf 13 des Dosiersystems 29 (Dosierpumpen) ein. Das Dosiersystem 29 weist neben dem Pumpenkopf 13 noch weitere Pumpenköpfe 14, 15 und 16 auf. Der Nichtlöser des Behälters wird dem Pumpenkopf 14 über die Leitung 7 zugeleitet. Von den Pumpenköpfen 13 bzw. 14 gelangen die erwähnten Materialien der Behälter 1 und 2 über Leitung 17 bzw. 18 in den statischen Rohrmischer 19. Der Rohrmischer 19 stellt ein Strömungsrohr dar. Die Förderleistung der Pumpenköpfe 13 und 14 wird so eingeregelt, dass das Mischungsverhältnis von Farbbildnerlösung, enthaltend 30 Gewichtsteile Xylylxylol und 15 Gewichtsteile Rapsölmethylester, zu Kerosin in dem frisch vereinigten Lösungsmittelgemisch 1 : 1,22 beträgt.

Dieses Gemisch wird einem weiteren statischen Rohrmischer 22 über die Leitung 21 zugeleitet. Gleichzeitig wird dem statischen Rohrmischer 22 über die Leitung 20 das Kapselwandmaterial über den Pumpenkopf 15 des Dosiersystems 29 zugespeist. Hierbei handelt es sich um eine Mischung aus Gelatine- und Gummiarabicum-Lösungen aus den Behältern 3 und 4, die über die Leitung 8 und 9 im Behälter 10 homogen gemischt werden. Das Gemisch wird darauf in der erwähnten Weise weitergeleitet. Die in dem Schnellmischer 22 gebildete grobe Emulsion wird über eine Leitung 23 sowie ein Feinemulgiergerät 24 sowie eine Leitung 26 dem Koazervierungsbehälter 28 zugeleitet. Gleichzeitig werden zur Koazervierung erforderliche Additive aus dem Behälter 5 über die Leitung 12, den Pumpenkopf 16 des Dosiersystems 29 und die Leitung 25 in den Koazervierungsbehälter 28 eingeführt. Hierbei handelt es sich um die die Koazervation einleitende wässerige Säurelösung. In dem Koazervierungsbehälter 28 mit Rührer 27 stellt sich zunächst ein System ein, bei dem das Kapselwandmaterial noch flüssig ist, aber bereits eine flüssige Umhüllung der einzukapselnden Tröpfchen vorliegt. Die Zeit zur Ausbildung der flüssigen Kapselumhüllung beträgt nur wenige Sekunden, z.B. 15 Sekunden. Nach Verlassen des Koazervierungsbehälters 28 über den Auslass 31 wird die entnommene Masse von 50°C auf etwa 6 bis 8°C abgekühlt. Das Kapselwandmaterial erstarrt aufgrund dieser Abkühlung. Um den Kapselwänden der gebildeten Kapseln eines Durchmessers von etwa 3 bis 10 µm irreversibel die gewünschte Härte zu verleihen, wird die erhaltene Kapseldispersion z.B. mit Hilfe einer Formalinlösung in bekannter Weise gehärtet. Die Vorrichtung, die zu diesem Abkühlen und Härten herangezogen werden, sind in der beschriebenen Figur nicht gezeigt. Vorrichtungen dieser Art sind bekannt.

Die folgenden Beispiele zeigen Rezepturen der erfindungsgemäßen einzukapselnden übersättigten Lösung von Farbreaktionspartnern von Farbreaktionssystemen:

### Beispiel 1

Rezeptur des einzukapselnden Öls:

| | |
|---|---|
| Kristallviolettlakton | 1,9 Gew.-% |
| 9-N-Butyl-carbazolyl-(3)-4'.4"-bis | |
| (N-methyl-N-phenylamino)-diphenylmethan | 0,7 Gew.-% |
| Monoisopropylbiphenyl | 17,4 Gew.-% |
| Rapsöl-Methylester | 20,0 Gew.-% |
| Entaromatisiertes Kerosin | 60,0 Gew.-% |
| | 100,0 Gew.-% |

### Beispiel 2

Rezeptur des einzukapselnden Öls:

| | |
|---|---|
| Kristallviolettlakton | 0,94 Gew.-% |
| 6-(N-Ethyl-N-p-tolylamino)-2-methyl-fluoran | 0,45 Gew.-% |
| 1.3-Dimethyl-6-diethylamino-fluoran | 0,56 Gew.-% |
| 2-Dibenzylamino-6-diethylamino-fluoran | 0,85 Gew.-% |
| 2-Phenylamino-3-methyl-6-diethylamino-fluoran | 2,00 Gew.-% |
| Schwarz reagierende Farbbildnermischung | 4,80 Gew.-% |
| Chlorparaffin | 10,00 Gew.-% |
| Rapsöl-Methylester | 30,2 Gew.-% |
| Entaromatisiertes Kerosin, naphthenreich | 55,00 Gew.-% |
| | 100,0 Gew.-% |

### Beispiel 3

Rezeptur des einzukapselnden Öls:

| | |
|---|---|
| Schwarzreagierende Farbbildnermischung gemäß Beispiel 2: | 4,8 Gew.-% |
| Diisopropylnaphthalin | 15,0 Gew.-% |
| Rapsöl- Methylester | 20,0 Gew.-% |
| Aliphatisches Kohlenwasserstofföl, gereinigt | 60,2 Gew.-% |
| | 100,0 Gew.-% |

### Beispiel 4

Rezeptur des einzukapselnden Öls:

| | |
|---|---|
| Kristallviolettlakton | 0,68 Gew.-% |
| 6-Diethylamino-2-carboxyethylester-fluoran | 0,40 Gew.-% |
| 6-(N-Ethyl-N-p-tolylamino)-2-methyl-fluoran | 0,32 Gew.-% |
| 6-Dimethylamino-2-dibenzlylamino-fluoran | 0,60 Gew.-% |
| 6-Diethylamino-2-phenylamino-3-methyl-fluoran | 1,40 Gew.-% |
| Schwarz reagierende Farbbildnermischung | 3,40 Gew.-% |
| Rapsöl-Methylester | 40,0 Gew.-% |
| Entaromatisiertes, gereinigtes Kerosin | 56,60 Gew.-% |
| Einzukapselnde Farbbildner-Lösung | 100,00 Gew.-% |

## Patentansprüche

1. Verfahren zum Einkapseln einer in einer wässerigen Emulsion vorliegenden Lösung von Farbreaktionspartnern von Farbreaktionssystemen durch übliche Mikroeinkapselungsverfahren, wobei der Farbreaktionspartner zunächst in einem Lösungsmittel gelöst und der erhaltenen Lösung unter schnellem Mischen ein Nichtlöser, der den Farbreaktionspartner allenfalls unwesentlich löst, in einer eine übersättigte Lösung einstellenden Menge beigemischt, die übersättigte Lösung unmittelbar unter schnellem Mischen in der wässerigen Phase emulgiert und unmittelbar danach das Einkapseln durchgeführt wird, **dadurch gekennzeichnet, dass** als Lösungsmittel ein Pflanzenöl-C₁-C₈-Alkylester verwendet wird.

2. Verfahren nach Anspruch 1, **dadurch gekennzeichnet, dass** ein Pflanzenöl-Methylester verwendet wird.

3. Verfahren nach Anspruch 2, **dadurch gekennzeichnet, dass** als Pflanzenöl-Methylester ein Rapsöl-Methylester verwendet wird, erhalten insbesondere aus erucasäurereichem Rapsöl.

4. Verfahren nach Anspruch 3, **dadurch gekennzeichnet, dass** der Rapsöl-Methylester in gereinigter Form eingesetzt wird.

5. Verfahren nach mindestens einem der vorhergehenden Ansprüche, **dadurch gekennzeichnet, dass** zusätzlich ein gutes Lösungsmittel verwendet wird, das den Farbreaktionspartner von Reaktionssystemen besser als der Pflanzenöl-C₁-C₈-Alkylester löst.

6. Verfahren nach Anspruch 5, **dadurch gekennzeichnet, dass** als gutes Lösungsmittel besseren Lösungsvermögens aromatische Lösungsmittel und/oder chlorierte Paraffine verwendet werden.

7. Verfahren nach Anspruch 6, **dadurch gekennzeichnet, dass** als aromatisches Lösungsmittel alkylierte Biphenyle, alkylierte Naphthaline, alkylierte Terphenyle, arylierte Xylole und/oder Diarylalkanverbindungen verwendet werden.

8. Verfahren nach mindestens einem der vorhergehenden Ansprüche, **dadurch gekennzeichnet, dass** als Nichtlöser ein nicht-aromatisches Lösungsmittel verwendet wird.

9. Verfahren nach Anspruch 8, **dadurch gekennzeichnet, dass** als nicht-aromatisches Lösungsmittel ein aliphatischer und/oder cycloaliphatischer Kohlenwasserstoff verwendet wird.

10. Verfahren nach mindestens einem der vorhergehenden Ansprüche 5 bis 9, **dadurch gekennzeichnet, dass** auf 1 Gew.-Teil Lösungsmittel oder Lösungsmittelgemisch etwa 0,5 bis 4 Gew.-Teile, insbesondere etwa 1 bis 2,5 Gew.-Teile Nichtlöser entfallen.

11. Verfahren nach mindestens einem der vorhergehenden Ansprüche 6 bis 10, **dadurch gekennzeichnet, dass** auf 1 Gew.-Teil gutes Lösungsmittel etwa 0,1 bis 9 Gew.-Teile, insbesondere etwa 0,25 bis 2 Gew.-Teile Pflanzenöl-C₁-C₈-Alkylester entfallen.

12. Verfahren nach Anspruch 11, **dadurch gekennzeichnet, dass** als Farbreaktionspartner von Farbreaktionssystemen ein basischer Farbbildner eingekapselt wird.

13. Verfahren nach Anspruch 12, **dadurch gekennzeichnet, dass** als basischer Farbbildner ein Lacton-Derivat, Fluoran-Derivat, Phthalid-Derivat, Diphenylmethan-Derivat, Triphenylmethan-Derivat, Oxazin-Derivat und/oder Spiropyran-Derivat eingesetzt werden.

14. Verfahren nach Anspruch 12 oder 13, **dadurch gekennzeichnet, dass** zusätzlich als Farbbildner N-Benzoylleucomethylen-Blau und/oder ein N-Alkylcarbazolyldiphenylmethan-Derivate eingesetzt werden.

15. Verfahren nach mindestens einem der vorhergehenden Ansprüche 12 bis 14, **dadurch gekennzeichnet, dass** der saure Farbreaktionspartner des basischen Farbbildners eingekapselt wird.

16. Verfahren nach Anspruch 15, **dadurch gekennzeichnet, dass** als saurer Farbreaktionspartner eine saure phenolische Verbindung und/oder ein zinkmodifiziertes Salicylsäurederivat und/oder sauer aktivierte Tonmineralien eingekapselt werden.

17. Verfahren nach mindestens einem der vorhergehenden Ansprüche, **dadurch gekennzeichnet, dass** zur Einkapselung das Koazervierungsverfahren angewandt wird.

18. Mikrokapseln für druckempfindliche Farbreaktionssysteme, erhältlich nach einem Verfahren gemäß mindestens einem der vorhergehenden Ansprüche 1 bis 17, und **dadurch gekennzeichnet, daß** der jeweilige Farbreaktionspartner innerhalb der Mikrokapseln in einem übersättigten System vorliegt, das als Lösungsmittel ein Pflanzenöl-C₁-C₈-Alkylester neben einem Nichtlöser enthält.

19. Mikrokapseln nach Anspruch 18, **dadurch gekennzeichnet, daß** auf ein Gewichtsteil Lösungsmittel oder Lösungsmittelgemisch etwa 0,5 bis 4 Gew.-Teile, insbesondere etwa 1 bis 2,5 Gew.-% Nichtlöser entfallen.

20. Mikrokapseln nach Anspruch 18 oder 19, **dadurch gekennzeichnet, daß** der Pflanzenöl-C₁-C₈-Alkylester in Form eines Pflanzenöl-Methylesters, insbesondere in Form eines Rapsöl-Methylesters vorliegt.

21. Mikrokapseln nach einem der Ansprüche 18 bis 20, **dadurch gekennzeichnet, daß** das übersättigte System zusätzlich ein gutes Lösungsmittel enthält, das den Farbreaktionspartner besser als der Pflanzenöl-C1-C8-Alkylester löst.

22. Mikrokapseln nach Anspruch 21, **dadurch gekennzeichnet, daß** auf 1 Gew.-Teil gutes Lösungsmittel etwa 0,1 bis 9 Gew.-Teile, insbesondere etwa 0,25 bis 2 Gew.-Teile Pflanzenöl-C₁-C₈-Alkylester entfallen.

23. Mikrokapseln nach Anspruch 21 oder 22, **dadurch gekennzeichnet, daß** das gute Lösungsmittel in Form eines aromatischen Lösungsmittels und/oder eines chlorierten Paraffins vorliegt.

24. Mikrokapseln nach Anspruch 23, **dadurch gekennzeichnet, daß** das aromatische Lösungsmittel in Form alkylierter Biphenyle, alkylierter Naphthaline, alkylierter Terphenyle, arylierter Xylole und/oder in Form vom Diarylalkanverbindungen vorliegt.

25. Mikrokapseln nach mindestens einem der vorhergehenden Ansprüche 18 bis 24, **dadurch gekennzeichnet, daß** der Nichtlöser als nicht-aromatisches Lösungsmittel, insbesondere in Form eines aliphatischen und/oder cycloaliphatischen Kohlenwasserstoffs, vorliegt.

26. Mikrokapseln nach mindestens einem der vorhergehenden Ansprüche 18 bis 25, **dadurch gekennzeichnet, daß** als Farbreaktionspartner ein basischer Farbbildner eingekapselt ist.

27. Mikrokapseln nach Anspruch 26, **dadurch gekennzeichnet, daß** als basischer Farbbildner ein Lacton-Derivat, Fluoran-Derivat, Phthalid-Derivat, Diphenylmethan-Derivat, Triphenylmethan-Derivat, Oxazin-Derivat und/oder Spiropyran-Derivat eingekapselt ist.

28. Mikrokapseln nach mindestens einem der vorhergehenden Ansprüche 18 bis 27, **dadurch gekennzeichnet, daß** ein saurer Reaktionspartner des basischen Farbbildners eines Farbreaktionssystems eingekapselt ist.

29. Mikrokapseln nach Anspruch 28, **dadurch gekennzeichnet, daß** als saurer Reaktionspartner eine saure phenolische Verbindung, ein zinkmodifiziertes Salicylsäurederivat und/oder sauer aktivierte Tonmineralien eingekapselt sind.

30. Mikrokapseln nach mindestens einem der Ansprüche 18 bis 29, **dadurch gekennzeichnet, daß** bei Raumtemperatur (20°C) der Übersättigungsgrad des eingekapselten Systems mindestens 5 %, insbesondere mindestens etwa 30 % beträgt.

31. Mikrokapseln nach Anspruch 30, **dadurch gekennzeichnet, daß** die Übersättigung mehr als 50 Gew.-%, insbesondere mehr als etwa 60 Gew.-% beträgt.

32. Mikrokapseln nach mindestens einem der Ansprüche 18 bis 31, **dadurch gekennzeichnet, daß** deren durchschnittlicher Teilchendurchmesser zwischen etwa 3 und 5, insbesondere zwischen etwa 3,5 und 4,5 µm liegt.

33. Verwendung der Mikrokapseln nach mindestens einem der vorhergehenden Ansprüche 18 bis 32 mit einer eingekapselten Mikrodispersion eines basischen Farbbildners, der durch die Reaktion mit sauren Reaktionspartnern eine Farbe liefert, in Farbreaktionspapieren.

## Claims

1. A process for encapsulating a solution of color reactants of color-reaction systems present in an aqueous emulsion accomplished by means of conventional microencapsulation processes, in which the color reactant is first dissolved in a solvent, and a non-dissolver, which may insignificantly dissolve the color reactant, is mixed in an amount that establishes a supersaturated solution into the resulting solution while mixing at high speed, the supersaturated solution is emulsified immediately in the aqueous phase while mixing at high speed, and immediately thereupon the encapsulation is performed, wherein a vegetable oil C₁-C₈ alkyl ester is used as the solvent.

2. The process of claim 1, wherein a vegetable oil methyl ester is used.

3. The process of claim 2, wherein a rapeseed oil methyl ester obtained in particular from eruca-acid-rich rapeseed oil is used as the vegetable oil methyl ester.

4. The process of claim 3, wherein the rapeseed oil methyl ester is used in purified form.

5. The process of at least 1 of the above claims, wherein in addition a good solvent, which dissolves the reactants of reaction systems better than the vegetable oil C₁-C₈ alkyl ester is used.

6. The process of claim 5, wherein aromatic solvents and/or chlorinated paraffins are used as the good solvent having a better dissolving power.

7. The process of claim 6, wherein alkylated biphenyls, alkylated naphthalenes, alkylated terphenyls, alkylated xylenes, and/or diarylalkane compounds are used as the aromatic solvent.

8. The process of at least one of the above claims, wherein a nonaromatic solvent is used as the non-dissolver.

9. The process of claim 8, wherein an aliphatic and/or cycloaliphatic hydrocarbon is used as the nonaromatic solvent.

10. The process of at least one of the above claims 5 to 9, wherein approximately 0.5 to 4 wt parts, in particular approximately 1 to 2.5 wt. parts non-dissolver, are used per 1 wt. part solvent or solvent mixture.

11. The process of at least one of the above claims 6 to 10, wherein approximately 0.1 to 9 wt. parts, in particular approximately 0.25 to 2 wt. parts vegetable oil C₁-C₈ alkyl ester are used per 1 wt. part good solvent.

12. The process of claim 11, wherein a basic color-producing substance is incapsulated as a color reactant of color-reaction systems.

13. The process of claim 12, wherein a lactone derivative, fluorane derivative, phthalide derivative, diphenylmethane derivative, triphenylmethane derivative, oxazin derivative, and/or spiropyrane derivative are used as the basic color-producing substance.

14. The process of claims 12 or 13, wherein N-benzoyl leucomethylene blue and/or an N-alkylcarbazoyldiphenyl methane derivative are also used as color-producing substances.

15. The process of at least one of the above claims 12 to 14, wherein the acid color reactant of the basic color-producing substance is encapsulated.

16. The process of claim 15, wherein an acidic phenolic compound and/or a zinc-modified salicylic acid derivative and/or acid-activated clay minerals are encapsulated as the acidic color reactant.

17. The process of at least one of the above claims, wherein the coacervation process is used for encapsulation.

18. Microcapsules for pressure-sensitive color-reaction systems, obtainable using a process of at least one of the above claims 1 to 17, and wherein the respective color-reactant within the microcapsules is present in a supersaturated system that a vegetable oil C₁-C₈ alkyl ester as the solvent and in addition to a non-dissolver.

19. Microcapsules of claim 18, wherein approximately 0.5 to 4 wt. parts, in particular approximately 1 to 2.5 wt. % [sic] non-dissolver is used per one weight part solvent mixture.

20. Microcapsules of claim 18 or 19, wherein the vegetable oil C₁-C₈ alkyl ester is present in the form of a vegetable oil methyl ester, in particular in the form of a rapeseed oil methyl ester.

21. The microcapsules of one of claims 18 to 20, wherein the supersaturated system also contains a good solvent that dissolves the color reactant better than the vegetable oil C₁-C₈ alkyl ester.

22. The microcapsules of claim 21, wherein approximately 0.1 to 9 wt. parts, in particular approximately 0.25 to 2 wt. parts, vegetable oil C₁-C₈ alkyl ester are used per 1 wt. part good solvent.

23. The microcapsules of claims 21 or 22, wherein the good solvent is present in the form of an aromatic solvent and/or chlorinated paraffin.

24. The microcapsules of claim 23, wherein the aromatic solvent is present in the form of alkylated biphenyls, alkylated naphthalenes, alkylated terphenyls, arylated xylenes, and/or in the form of diarylalkane compounds.

25. The microcapsules of at least one of the above claims 18 to 24, wherein the non-dissolver is present as a nonaromatic solvent, in particular in the form of an aliphatic and/or cycloaliphatic hydrocarbon.

26. The microcapsules of at least one of the above claims 18 to 25, wherein a basic color-producing substance is encapsulated as a color reactant.

27. The microcapsules of claim 26, wherein a lactone derivative, fluorane derivative, phthalide derivative, diphenylmethane derivative, triphenylmethane derivative, oxazin derivative, and/or spiropyrane derivative is encapsulated as a basic color-producing substance.

28. The microcapsules of at least one of the above claims 18 to 27, wherein an acid reactant of the basic color-producing substance of the color-reaction system is encapsulated.

29. The microcapsules of claim 28, wherein an acidic phenolic compound, a zinc-modified salicylic acid derivative, and/or acid-activated clay minerals are encapsulated as the acidic reactant.

30. Microcapsules of at least one of claims 18 to 29, wherein at room temperature (20°C) the degree of supersaturation of the encapsulated system is at least 5%, in particular at least approximately 30%.

31. The microcapsules of claim 30, wherein the supersaturation is more than 50 wt. %, in particular more than approximately 60 wt. %.

32. The microcapsules of at least one of claims 18 to 31, wherein the average particle diameter of said microcapsules lies between approximately 3 and 5, in particular between approximately 3.5 and 4.5 µm.

33. The use of the microcapsules of at least one of the above claims 18 to 32 with an encapsulated microdispersion of a basic color-producing substance, which produces a color by means of the reaction with acidic reactants, in color-reaction papers.

## Revendications

1. Procédé d'encapsulation par des techniques habituelles de microencapsulation d'une solution, présente dans une émulsion aqueuse, de partenaires réactionnels de systèmes de réaction colorée, le partenaire réactionnel étant tout d'abord dissous dans un solvant et la solution obtenue étant additionnée, sous agitation énergique, d'un non-solvant, qui dissout tout au plus dans une mesure insignifiante le partenaire réactionnel, en une quantité donnant une solution sursaturée, la solution sursaturée est immédiatement émulsifiée sous agitation énergique dans la phase aqueuse et l'encapsulation est effectuée immédiatement après, **caractérisé en ce qu'**on utilise comme solvant un ester d'alkyle en C₁ à C₈ d'une huile végétale.

2. Procédé suivant la revendication 1, **caractérisé en ce qu'**on utilise un ester méthylique d'huile végétale.

3. Procédé suivant la revendication 2, **caractérisé en ce qu'**on utilise comme ester méthylique d'huile végétale un ester méthylique d'huile de colza, obtenu en particulier à partir d'une huile de colza riche en acide érucique.

4. Procédé suivant la revendication 3, **caractérisé en ce que** l'ester méthylique d'huile de colza est utilisé sous une forme purifiée.

5. Procédé suivant au moins l'une des revendications précédentes, **caractérisé en ce qu'**on utilise en outre un solvant convenable, qui dissout mieux le partenaire réactionnel de systèmes de réaction colorée que l'ester d'alkyle en C₁ à C₈ d'huile végétale.

6. Procédé suivant la revendication 5, **caractérisé en ce qu'**on utilise comme solvant convenable de meilleur pouvoir dissolvant des hydrocarbures aromatiques et/ou des paraffines chlorées.

7. Procédé suivant la revendication 6, **caractérisé en ce qu'**on utilise comme solvant aromatique des biphényles alkylés, des naphtalènes alkylés, des terphényles alkylés, des xylènes arylés et/ou des composés diarylés d'alcanes.

8. Procédé suivant au moins l'une des revendications précédentes, **caractérisé en ce qu'**on utilise comme non-solvant un solvant non aromatique.

9. Procédé suivant la revendication 8, **caractérisé en ce qu'**on utilise comme solvant non aromatique un hydrocarbure aliphatique et/ou un hydrocarbure cycloaliphatique.

10. Procédé suivant au moins l'une des revendications 5 à 9 précédentes, **caractérisé en ce qu'**on utilise pour une partie en poids de solvant ou de mélange de solvants environ 0,5 à 4 parties en poids, en particulier environ 1 à 2,5 parties en poids de non-solvant.

11. Procédé suivant au moins l'une des revendications 6 à 10 précédentes, **caractérisé en ce qu'**on utilise pour une partie en poids de solvant convenable environ 0,1 à 9 parties en poids, en particulier environ 0,25 à 2 parties en poids d'ester d'alkyle en C₁ à C₈ d'huile végétale.

12. Procédé suivant la revendication 11, **caractérisé en ce qu'**on encapsule comme partenaire réactionnel de systèmes de réaction colorée un chromogène basique.

13. Procédé suivant la revendication 12, **caractérisé en ce qu'**on utilise comme chromogène basique un dérivé de lactone, un dérivé de fluoranne, un dérivé de phtalide, un dérivé de diphénylméthane, un dérivé de triphénylméthane, un dérivé d'oxazine et/ou un dérivé de spiropyranne.

14. Procédé suivant la revendication 12 ou 13, **caractérisé en ce qu'**on utilise en outre comme chromogène du bleu de N-benzoylleucométhylène et/ou un dérivé de N-alkyl-carbazolyldiphénylméthane.

15. Procédé suivant au moins l'une des revendications 12 à 14 précédentes, **caractérisé en ce que** le partenaire réactionnel acide du chromogène basique est encapsulé.

16. Procédé suivant la revendication 15, **caractérisé en ce qu'**on encapsule comme partenaire réactionnel acide un composé phénolique acide et/ou un dérivé d'acide salicylique modifié par le zinc et/ou des matières minérales argileuses activées par un acide.

17. Procédé suivant au moins l'une des revendications précédentes, **caractérisé en ce qu'**on utilise la technique de coacervation pour l'encapsulation.

18. Microcapsules destinées à des systèmes de réaction colorée sensibles à la pression, obtenues par un procédé selon au moins l'une des revendications 1 à 17 précédentes, et **caractérisées par le fait que** chaque partenaire de réaction colorée est présent à l'intérieur des microcapsules dans un système sursaturé qui contient comme solvant un ester d'alkyle en C₁ à C₈ d'huile végétale, à côté d'un non-solvant.

19. Microcapsules suivant la revendication 18, **caractérisées en ce qu'**on utilise pour une partie en poids de solvant ou de mélange de solvant environ 0,5 à 4 parties en poids, en particulier environ 1 à 2,5 parties en poids de non-solvant.

20. Microcapsules suivant la revendication 18 ou 19, **caractérisées en ce que** l'ester d'alkyle en C₁ à C₈ d'huile végétale est présent sous forme d'un ester méthylique d'huile végétale, en particulier sous forme d'un ester méthylique d'huile de colza.

21. Microcapsules suivant l'un des revendications 18 à 20, **caractérisées en ce que** le système sursaturé contient en outre un solvant convenable qui dissout mieux le partenaire de réaction colorée que l'ester d'alkyle en C₁ à C₈ d'huile végétale.

22. Microcapsules suivant la revendication 21, **caractérisées en ce qu'**on utilise pour une partie en poids de solvant convenable environ 0,1 à 9 parties en poids, notamment environ 0,25 à 2 parties en poids d'ester d'alkyle en C₁ à C₈ d'huile végétale.

23. Microcapsules suivant la revendication 21 ou 22, **caractérisées en ce que** le solvant convenable est présent sous forme d'un solvant aromatique et/ou d'une paraffine chlorée.

24. Microcapsules suivant la revendication 23, **caractérisées en ce que** le solvant aromatique est présent sous forme de biphényles alkylés, de naphtalènes alkylés, de terphényles alkylés, de xylènes arylés et/ou sous forme de composés diarylés d'alcanes.

25. Microcapsules suivant au moins l'une des revendications 18 à 24 précédentes, **caractérisées en ce que** le non-solvant est présent comme solvant non aromatique, en particulier sous forme d'un hydrocarbure aliphatique et/ou d'un hydrocarbure cycloaliphatique.

26. Microcapsules suivant au moins l'une des revendications 18 à 25 précédentes, **caractérisées en ce qu'**un chromogène basique est encapsulé comme partenaire de réaction colorée.

27. Microcapsules suivant la revendication 26, **caractérisées en ce que** le chromogène basique encapsulé est un dérivé de lactone, un dérivé de fluoranne, un dérivé de phtalide, un dérivé de diphénylméthane, un dérivé de triphénylméthane, un dérivé d'oxazine et/ou un dérivé de spiropyranne.

28. Microcapsules suivant au moins l'une des revendications 18 à 27 précédentes, **caractérisées en ce qu'**un partenaire de réaction acide du chromogène basique d'un système de réaction colorée est encapsulé.

29. Microcapsules suivant la revendication 28, **caractérisées en ce qu'**un composé phénolique acide, un dérivé d'acide salicylique modifié par le zinc et/ou des matières minérales argileuses activées par un acide sont encapsulés comme partenaire de réaction acide.

30. Microcapsules suivant au moins l'une des revendications 18 à 29, **caractérisées en ce que** le degré de sursaturation du système encapsulé est d'au moins 5 %, en particulier d'au moins 30 %, à la température ambiante (20°C).

31. Microcapsules suivant la revendication 30, **caractérisées en ce que** la sursaturation s'élève à plus de 50 % en poids, notamment à plus de 60 % en poids.

32. Microcapsules suivant au moins l'une des revendications 18 à 31, **caractérisées en ce que** leur diamètre moyen de particules se situe entre environ 3 et 5, en particulier entre environ 3,5 et 4,5 µm.

33. Utilisation des microcapsules suivant au moins l'une des revendications 18 à 32 précédentes, avec une microdispersion encapsulée d'un chromogène basique, qui fournit une couleur par réaction avec des partenaires réactionnels acides, dans des papiers donnant une réaction colorée.
